# EUROPEAN PATENT APPLICATION

(11) **EP 4 811 685 A1**
(43) Date of publication of application: **23.09.2026**
(21) Application number: 23963096.5
(22) Date of filing: 27.12.2023
(51) Int. Cl.: H04B 10/80, H04B 10/071

(54) **OPTICAL COMMUNICATION SYSTEM**

(71) Applicant: Mitsubishi Electric Corporation, Tokyo 100-8310 (JP)
(72) Inventor: NAKAMURA, Seiki, Tokyo 100-8310 (JP); IMANISHI, Katsunori, Tokyo 100-8310 (JP)
(74) Representative: Plasseraud IP
(86) International application number: PCT/JP2023/046837
(87) International publication number: WO 2025/141744

(57) **Abstract**

An optical communication system is configured to include: a first optical fiber (3) to cause communication light transmitted from a communication device (1) to propagate to a counterpart device (2); a second optical fiber (5) to cause communication light transmitted from the counterpart device (2) to propagate to the communication device (1); a plurality of first bypass fibers (7-1 to 7-G) to bypass an optical amplifier (4) inserted into the first optical fiber (3); and a plurality of second bypass fibers (8-1 to 8-G) to bypass an optical amplifier (6) inserted into the second optical fiber (5). Furthermore, the optical communication system includes a sensor device (9) to send sensor light to one of the first optical fiber (3) and the second optical fiber (5), and receive backscattered light having returned from one of the first optical fiber (3) and the second optical fiber (5).

## Description

### TECHNICAL FIELD

The present disclosure relates to an optical communication system.

### BACKGROUND ART

There is an optical communication system that includes optical fibers for communication that cause communication light transmitted from a communication device to propagate to a counterpart device, and optical fibers for communication that cause communication light transmitted from the counterpart device to propagate to the communication device. Generally, an optical amplifier is inserted into each optical fiber, and therefore a light propagation direction of each optical fiber is a unilateral direction.

As such an optical communication system, for example, Patent Literature 1 discloses an optical communication system in which, in addition to the above optical fibers, optical fibers for sensing for causing sensor light and backscattered light to propagate are wired between a communication device and a counterpart device. Optical amplifiers are not inserted into the optical fibers for sensing, and therefore a light propagation direction of the optical fibers for sensing is a bidirectional direction. The optical communication system disclosed in Patent Literature 1 includes a sensor device that sends sensor light to the optical fibers for sensing, receives backscattered light of the sensor light having returned from the optical fiber for sensing, and senses the optical fibers for communication on the basis of the backscattered light.

### CITATION LIST

### PATENT LITERATURE

Patent Literature 1: WO 2021-111699 A

### SUMMARY OF INVENTION

### TECHNICAL PROBLEM

In the optical communication system disclosed in Patent Literature 1, the optical fibers for sensing having the lengths equal to those of the optical fibers for communication need to be wired in order for the sensor device to sense the optical fibers for communication. Hence, the optical communication system has a problem that, as the distance between the communication device and the counterpart device increases, the optical fibers for sensing having longer cable lengths need to be wired.

The present disclosure has been made to solve the above problem, and an object of the present disclosure is to provide an optical communication system that can sense optical fibers for communication without wiring optical fibers for sensing that connect a communication device and a counterpart device.

### SOLUTION TO PROBLEM

An optical communication system according to the present disclosure includes: a first optical fiber to cause communication light transmitted from a communication device to propagate to a counterpart device; a second optical fiber to cause communication light transmitted from the counterpart device to propagate to the communication device; a plurality of first bypass fibers to bypass an optical amplifier inserted into the first optical fiber; and a plurality of second bypass fibers to bypass an optical amplifier inserted into the second optical fiber. Furthermore, the optical communication system includes a sensor device to send sensor light to one of the first optical fiber and the second optical fiber, and receive backscattered light having returned from one of the first optical fiber and the second optical fiber.

### ADVANTAGEOUS EFFECTS OF INVENTION

According to the present disclosure, it is possible to sense optical fibers for communication without wiring optical fibers for sensing that connect a communication device and a counterpart device.

### BRIEF DESCRIPTION OF DRAWINGS

FIG. 1 is a configuration diagram illustrating an optical communication system according to Embodiment 1.
FIG. 2 is an explanatory view illustrating conceptual representation of each of optical spectra of sensor light and backscattered light.
FIG. 3 is a configuration diagram illustrating an optical communication system according to Embodiment 2.
FIG. 4 is an explanatory view illustrating wavelengths of communication light related to N counterpart devices 2-1 to 2-N.
FIG. 5 is a configuration diagram illustrating an optical communication system according to Embodiment 3.
FIG. 6 is a configuration diagram illustrating an optical communication system according to Embodiment 4.
FIG. 7 is a configuration diagram illustrating an optical communication system according to Embodiment 5.
FIG. 8 is a configuration diagram illustrating an optical communication system according to Embodiment 6.
FIG. 9 is a configuration diagram illustrating an optical communication system according to Embodiment 7.
FIG. 10 is a configuration diagram illustrating part of an optical communication system according to Embodiment 8.
FIG. 11 is a configuration diagram illustrating part of an optical communication system according to Embodiment 9.
FIG. 12 is a configuration diagram illustrating part of an optical communication system according to Embodiment 10.
FIG. 13 is a configuration diagram illustrating an optical communication system according to Embodiment 11.
FIG. 14 is a configuration diagram illustrating another optical communication system according to Embodiment 11.
FIG. 15 is a configuration diagram illustrating an optical communication system according to Embodiment 12.

### DESCRIPTION OF EMBODIMENTS

Hereinafter, a mode for carrying out the present disclosure will be described with reference to the accompanying drawings to describe the present disclosure in more detail.

### Embodiment 1.

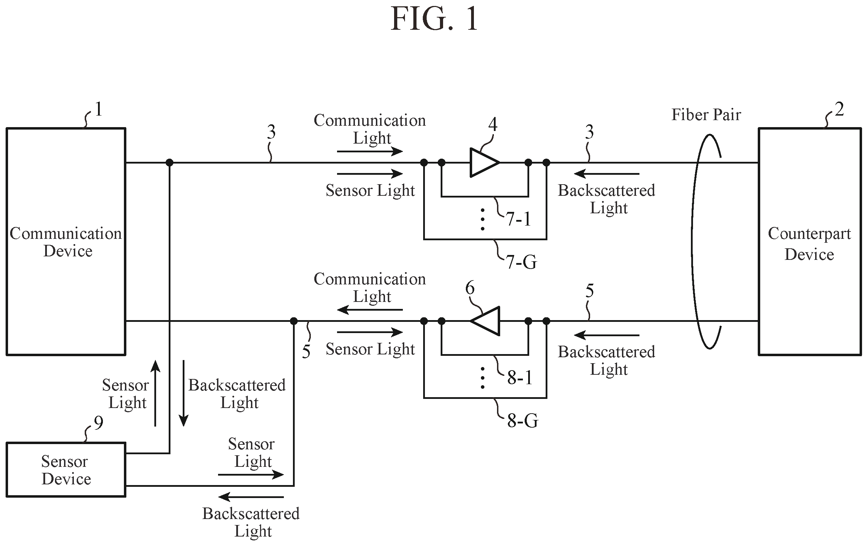

FIG. 1 is a configuration diagram illustrating an optical communication system according to Embodiment 1.

The optical communication system illustrated in FIG. 1 includes a communication device 1, a counterpart device 2, a first optical fiber 3, an optical amplifier 4, a second optical fiber 5, an optical amplifier 6, a first bypass fiber 7, a second bypass fiber 8, and a sensor device 9.

The communication device 1 includes an optical transmitter that transmits communication light, and an optical receiver that receives the communication light.

The counterpart device 2 is a communication device that transmits and receives communication light to and from the communication device 1.

The counterpart device 2 includes an optical receiver that receives communication light transmitted from the communication device 1, and an optical transmitter that transmits the communication light to the communication device 1.

The first optical fiber 3 is implemented by, for example, a single-core or multi-core core wire of a single-mode or multi-mode fiber.

One end of the first optical fiber 3 is connected to the communication device 1, and the other end of the first optical fiber 3 is connected to the counterpart device 2.

The first optical fiber 3 is an optical fiber for communication that causes communication light transmitted from the communication device 1 to propagate to the counterpart device 2.

The optical amplifier 4 is inserted into the first optical fiber 3.

The optical amplifier 4 is implemented by, for example, an Erbium-Doped Fiber Amplifier (EDFA) or Semiconductor Optical Amplifiers (SOAs).

The optical amplifier 4 amplifies communication light transmitted from the communication device 1, and outputs the amplified communication light to the counterpart device 2.

The second optical fiber 5 is implemented by, for example, a single-core or multi-core core wire of a single-mode or multi-mode fiber.

One end of the second optical fiber 5 is connected to the communication device 1, and the other end of the second optical fiber 5 is connected to the counterpart device 2.

The second optical fiber 5 is an optical fiber for communication that causes communication light transmitted from the counterpart device 2 to propagate to the communication device 1.

The optical amplifier 6 is inserted into the second optical fiber 5.

The optical amplifier 6 is implemented by, for example, an EDFA or an SOA.

The optical amplifier 6 amplifies communication light transmitted from the counterpart device 2, and outputs the amplified communication light to the communication device 1.

Each of the first bypass fibers 7-1 to 7-G is implemented by, for example, a single-core or multi-core core wire of a single-mode or multi-mode fiber. G represents an integer equal to or more than two.

The first bypass fiber 7-g (g = 1, ..., and G) is a fiber for bypassing the optical amplifier 4 inserted into the first optical fiber 3.

More specifically, one end of the first bypass fiber 7-g is connected to an input side of the optical amplifier 4, and the other end of the first bypass fiber 7-g is connected to an output side of the optical amplifier 4.

Each of the second bypass fibers 8-1 to 8-G is implemented by, for example, a single-core or multi-core core wire of a single-mode or multi-mode fiber.

The second bypass fiber 8-g is a fiber for bypassing the optical amplifier 6 inserted into the second optical fiber 5.

More specifically, one end of the second bypass fiber 8-g is connected to an input side of the optical amplifier 6, and the other end of the second bypass fiber 8-g is connected to an output side of the optical amplifier 6.

The sensor device 9 includes an optical transmitter that transmits sensor light, an optical receiver that receives backscattered light of the sensor light, and a detection unit that senses one of the first optical fiber 3 and the second optical fiber 5 on the basis of the backscattered light.

The sensor device 9 sends sensor light to one of the first optical fiber 3 and the second optical fiber 5, and receives backscattered light having returned from one of the first optical fiber 3 and the second optical fiber 5.

The sensor device 9 senses one of the first optical fiber 3 and the second optical fiber 5 on the basis of the backscattered light.

Next, an operation of the optical communication system illustrated in FIG. 1 will be described.

When the communication device 1 transmits communication light to the counterpart device 2, the communication device 1 sends the communication light to the first optical fiber 3.

The communication light sent to the first optical fiber 3 is amplified by the optical amplifier 4, and the amplified communication light reaches the counterpart device 2.

Thus, the counterpart device 2 receives the communication light transmitted from the communication device 1.

When the counterpart device 2 transmits communication light to the communication device 1, the counterpart device 2 sends the communication light to the second optical fiber 5.

The communication light sent to the second optical fiber 5 is amplified by the optical amplifier 6, and the amplified communication light reaches the communication device 1.

Thus, the communication device 1 receives the communication light transmitted from the counterpart device 2.

Each of the first optical fiber 3 and the second optical fiber 5 may change, for example, depending on a surrounding environment or as time passes. Examples of these changes include a temperature change, a vibration change, a stress change, or an optical loss change.

The sensor device 9 sends sensor light to the first optical fiber 3 when sensing the first optical fiber 3.

The sensor light sent to the first optical fiber 3 is scattered by the first optical fiber 3, and backscattered light of the sensor light returns to the sensor device 9. The backscattered light of the sensor light is scattered light that depends on a change in the first optical fiber 3.

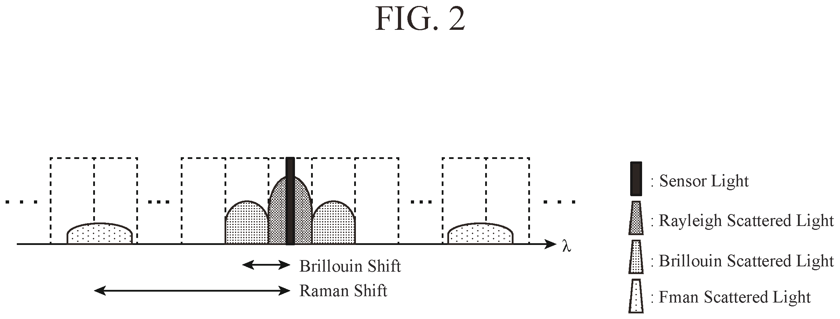

Examples of the backscattered light of the sensor light include Rayleigh scattered light, Brillouin scattered light, or Raman scattered light as illustrated in FIG. 2.

FIG. 2 is an explanatory view illustrating conceptual representation of each of optical spectra of sensor light and backscattered light.

In FIG. 2, the horizontal axis indicates a wavelength, FIG. 2 illustrates each of optical spectra of the sensor light and the backscattered light.

A light propagation direction of the optical amplifier 4 inserted into the first optical fiber 3 is a unilateral direction, and therefore backscattered light of sensor light cannot pass through the optical amplifier 4. However, the first bypass fibers 7-1 to 7-G for bypassing the optical amplifier 4 are wired in the optical communication system illustrated in FIG. 1, so that the backscattered light of the sensor light can return to the sensor device 9 through one of the first bypass fibers 7-1 to 7-G.

The sensor device 9 receives the backscattered light having returned from the first optical fiber 3, and senses the first optical fiber 3 on the basis of the backscattered light.

Since sensing of the sensor device 9 itself is a known technique, detailed description thereof will be omitted.

The sensor device 9 sends sensor light to the second optical fiber 5 when sensing the second optical fiber 5.

The sensor light sent to the second optical fiber 5 is scattered by the second optical fiber 5, and backscattered light of the sensor light returns to the sensor device 9. The backscattered light of the sensor light is scattered light that corresponds to a change in the second optical fiber 5.

A light propagation direction of the optical amplifier 6 inserted into the second optical fiber 5 is a unilateral direction, and therefore the sensor light cannot pass through the optical amplifier 6. However, the second bypass fibers 8-1 to 8-G for bypassing the optical amplifier 6 are wired in the optical communication system illustrated in FIG. 1, so that the sensor light can propagate to the counterpart device 2 side through one of the second bypass fibers 8-1 to 8-G.

The sensor device 9 receives the backscattered light having returned from the second optical fiber 5, and senses the second optical fiber 5 on the basis of the backscattered light.

The optical communication system illustrated in FIG. 1 includes G first bypass fibers 7-1 to 7-G and G second bypass fibers 8-1 to 8-G.

In the first bypass fibers 7-1 to 7-G, wavelengths of sensor light that can propagate may be mutually different, and wavelengths of backscattered light that can propagate may be mutually different.

Furthermore, in the second bypass fibers 8-1 to 8-G, wavelengths of sensor light that can propagate may be mutually different, and wavelengths of backscattered light that can propagate may be mutually different.

In this case, the sensor device 9 sends to the first optical fiber 3 a plurality of beams of sensor light having the mutually different wavelengths to detect a plurality of types of changes, so that one of the first bypass fibers 7-1 to 7-G can allow one of beams of sensor light to pass.

Similarly, the sensor device 9 sends to the second optical fiber 5 a plurality of beams of sensor light having the mutually different wavelengths to detect a plurality of types of changes, so that one of the second bypass fibers 8-1 to 8-G can allow one of beams of sensor light to pass.

For example, a configuration can be employed in which sensor light for temperature change detection passes through each of the first bypass fiber 7-1 and the second bypass fiber 8-1, and backscattered light of the sensor light passes through each of the first bypass fiber 7-1 and the second bypass fiber 8-1.

For example, a configuration can be employed in which where sensor light for vibration change detection passes through each of the first bypass fiber 7-G and the second bypass fiber 8-G, and backscattered light of the sensor light passes through each of the first bypass fiber 7-G and the second bypass fiber 8-G.

According to above Embodiment 1, the optical communication system has been configured to include the first optical fiber 3 that causes communication light transmitted from the communication device 1 to propagate to the counterpart device 2, the second optical fiber 5 that causes communication light transmitted from the counterpart device 2 to propagate to the communication device 1, a plurality of first bypass fibers 7-1 to 7-G that bypass the optical amplifier 4 inserted into the first optical fiber 3, and a plurality of second bypass fibers 8-1 to 8-G that bypass the optical amplifier 6 inserted into the second optical fiber 5. Furthermore, the optical communication system includes the sensor device 9 that sends sensor light to one of the first optical fiber 3 and the second optical fiber 5, and receives backscattered light having returned from one of the first optical fiber 3 and the second optical fiber 5. Accordingly, it is possible to sense optical fibers for communication without wiring optical fibers for sensing that connect the communication device 1 and the counterpart device 2.

In the optical communication system illustrated in FIG. 1, the sensor device 9 is disposed on the communication device 1 side. However, this is merely an example, and the sensor device 9 may be disposed on the counterpart device 2 side. Even in this case, it is possible to sense the optical fibers for communication without wiring the optical fibers for sensing that connect the communication device 1 and the counterpart device 2.

The optical communication system illustrated in FIG. 1 includes the first optical fiber 3, the second optical fiber 5, the first bypass fibers 7-1 to 7-G, and the second bypass fibers 8-1 to 8-G.

The optical communication system illustrated in FIG. 1 includes an optical communication system configured by adding the first bypass fibers 7-1 to 7-G, the second bypass fibers 8-1 to 8-G, and the sensor device 9 to the optical communication system including the existing first optical fiber 3 and the existing second optical fiber 5.

### Embodiment 2.

Embodiment 2 will describe an optical communication system including N (N represents an integer equal to or more than two) counterpart devices 2.

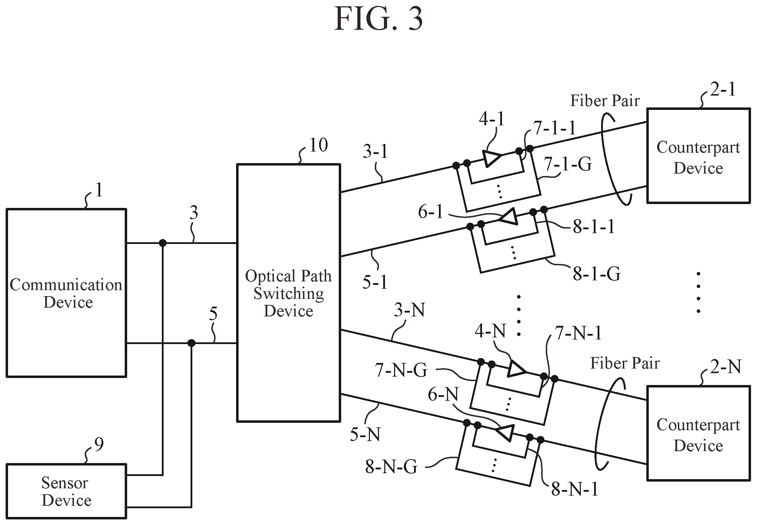

FIG. 3 is a configuration diagram illustrating the optical communication system according to Embodiment 2. Note that, in FIG. 3, the same reference numerals as those in FIG. 1 indicate identical or corresponding parts, and therefore detailed description thereof will be omitted.

The optical communication system illustrated in FIG. 3 includes the communication device 1, counterpart devices 2-1 to 2-N, the first optical fiber 3, split first optical fibers 3-1 to 3-N, optical amplifiers 4-1 to 4-N, the second optical fiber 5, split second optical fibers 5-1 to 5-N, optical amplifiers 6-1 to 6-N, first bypass fibers 7-1-1 to 7-N-G, second bypass fibers 8-1-1 to 8-N-G, the sensor device 9, and an optical path switching device 10.

Each of the counterpart devices 2-1 to 2-N is a communication device that has the same function as that of the counterpart device 2 illustrated in FIG. 1.

The first optical fiber 3 is split into N fibers by the optical path switching device 10, and a split first optical fiber 3-n (n =1, ..., and N) is connected to a counterpart device 2-n.

An optical amplifier 4-n is inserted into the split first optical fiber 3-n.

The optical amplifier 4-n is implemented by, for example, an EDFA or an SOA.

The optical amplifier 4-n amplifies communication light output from the optical path switching device 10, and outputs the amplified communication light to the counterpart device 2-n.

The second optical fiber 5 is split into N fibers by the optical path switching device 10, and a split second optical fiber 5-n is connected to the counterpart device 2-n.

An optical amplifier 6-n is inserted into the split second optical fiber 5-n.

The optical amplifier 6-n is implemented by, for example, an EDFA or an SOA.

The optical amplifier 6-n amplifies communication light transmitted from the counterpart device 2, and outputs the amplified communication light to the optical path switching device 10.

Each of the first bypass fibers 7-1-1 to 7-N-G is implemented by, for example, a single-core or multi-core core wire of a single-mode or multi-mode fiber.

A first bypass fiber 7-n-g (g = 1, ..., and G) is a fiber for bypassing the optical amplifier 4-n inserted into the first optical fiber 3-n.

More specifically, one end of the first bypass fiber 7-n-g is connected to an input side of the optical amplifier 4-n, and the other end of the first bypass fiber 7-n-g is connected to an output side of the optical amplifier 4-n.

Each of the second bypass fibers 8-1-1 to 8-N-G is implemented by, for example, a single-core or multi-core core wire of a single-mode or multi-mode fiber.

A second bypass fiber 8-n-g is a fiber for bypassing the optical amplifier 6-n inserted into the second optical fiber 5-n.

More specifically, one end of the second bypass fiber 8-n-g is connected to an input side of the optical amplifier 6-n, and the other end of the second bypass fiber 8-n-g is connected to an output side of the optical amplifier 6-n.

The optical path switching device 10 is implemented by, for example, a Wavelength Selective Switch (WSS).

The optical path switching device 10 outputs communication light transmitted from the communication device 1, to any one counterpart device 2-n of the N counterpart devices 2-1 to 2-N through any one split first optical fiber 3-n of the split first optical fibers 3-1 to 3-N.

The optical path switching device 10 outputs, to the communication device 1, the communication light having propagated from any one counterpart device 2-n through the split second optical fiber 5-n.

Next, an operation of the optical communication system illustrated in FIG. 3 will be described.

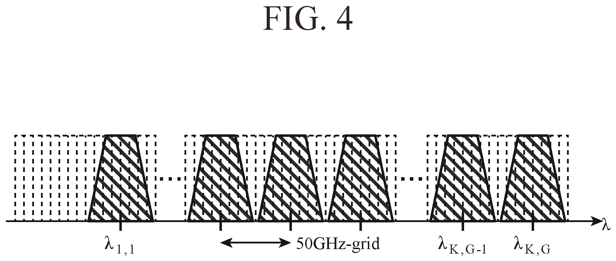

In the optical communication system illustrated in FIG. 3, wavelengths of communication light related to the N counterpart devices 2-1 to 2-N are different from each other as illustrated in FIG. 4. The wavelength of the communication light related to the counterpart device 2-1 is, for example, λ_{1, 1} to λ_{1, G}, the wavelength of the communication light related to the counterpart device 2-(N-1) is, for example, λ_{K-1, 1} to λ_{K-1, G}, and the wavelength of the communication light related to the counterpart device 2-N is, for example, λ_{K, 1} to λ_{K, G}. Note that N = K may hold, and N ≠ K may hold. In a case of N ≠ K, for example, N < K holds.

FIG. 4 is an explanatory view illustrating the wavelengths of the communication light related to the N counterpart devices 2-1 to 2-N.

In FIG. 4, the horizontal axis indicates a wavelength, In an example in FIG. 4, λ_{1 , 1}< ... < λ_{K, G-1} < λ_{K, G} holds.

FIG. 4 illustrates an example where communication light is a signal of 128 Gbit/s (32 GBd DP-QPSK), and one wavelength channel width is 50 GHz-grid.

In the above example, the communication device 1 outputs communication light of one or more wavelength from λ_{1, 1} to λ_{1, G} to the optical path switching device 10 when transmitting the communication light to the counterpart device 2-1, outputs communication light of one or more wavelength from λ_{K-1, 1} to λ_{K-1, G} to the optical path switching device 10 when transmitting the communication light to the counterpart device 2-(N-1), and outputs communication light of one or more wavelength from λ_{K, 1} to λ_{K, G} to the optical path switching device 10 when transmitting the communication light to the counterpart device 2-N.

The communication device 1 outputs communication light including the communication light of the wavelengths λ₁, _{g} (g = 1, ..., and G), ..., and λ_{K, g} to the optical path switching device 10 when transmitting the communication light to all of the N communication device 2-1 to 2-N.

When the optical path switching device 10 receives the communication light from the communication device 1, if this communication light includes the communication light of the wavelength λ_{1, g}, the optical path switching device 10 outputs the communication light of the wavelength λ_{1, g} to the counterpart device 2-1 by sending the communication light of the wavelength λ_{1, g} to the split first optical fiber 3-1-g.

If the communication light output from the communication device 1 includes the communication light of the wavelength λ_{K-1, g}, the optical path switching device 10 outputs the communication light of the wavelength λ_{K-1, g} to the counterpart device 2-(N-1) by sending the communication light of the wavelength λ_{K-1, g} to the split first optical fiber 3-(N-1)-g.

If the communication light output from the communication device 1 includes the communication light of the wavelength λ_{K, g}, the optical path switching device 10 outputs the communication light of the wavelength λ_{K, g} to the counterpart device 2-N by sending the communication light of the wavelength λ_{K, g} to the split first optical fiber 3-N-g.

The counterpart device 2-n (n = 1, ..., and N) outputs the communication light of a wavelength λ_{k, g} to the optical path switching device 10 by sending the communication light of the wavelength λ_{k, g} to the split second optical fiber 5-n-g. k represents one of 1 to K.

When receiving the communication light of the wavelength λ_{k, g} from the counterpart device 2-n, the optical path switching device 10 outputs the communication light of the wavelength λ_{k, g} to the communication device 1 by sending the communication light of the wavelength λ_{k, g} to the second optical fiber 5.

When, for example, receiving the communication light from the N counterpart devices 2-1 to 2-N, the optical path switching device 10 outputs the communication light to the communication device 1 by sending the communication light including the communication light of the wavelength λ₁, _{g},..., and λ_{K, g} to the second optical fiber 5.

In the optical communication system illustrated in FIG. 3, wavelengths of sensor light related to the N counterpart devices 2-1 to 2-N are different from each other. The wavelength of the sensor light related to the counterpart device 2-1 is, for example, λ_{1, 1}' to λ_{1, G}', the wavelength of the sensor light related to the counterpart device 2-(N-1) is, for example, λ_{K-1, 1}' to λ_{K-1, G}', and the wavelength of the sensor light related to the counterpart device 2-N is, for example, λ_{K, 1}' to λ_{K, G}'. For example, λ_{1, 1}' < ... < λ_{K, g}' < λ_{1, 1} < ... < λ_{K, g}, or λ_{1, 1} < ... < λ_{K, g} < λ_{1, 1}' < ... < λ_{K, g}' holds.

The sensor device 9 sends sensor light of a wavelength λ_{k, g}' to the first optical fiber 3 when sensing the split first optical fiber 3-n (n = 1, ..., and N).

The sensor light of the wavelength λ_{k, g}' sent to the first optical fiber 3 is sent to the split first optical fiber 3-n by the optical path switching device 10.

The sensor light sent to the split first optical fiber 3-n is scattered by the split first optical fiber 3-n, and backscattered light of the sensor light returns to the optical path switching device 10.

The optical path switching device 10 outputs the backscattered light to the sensor device 9 by sending the backscattered light to the first optical fiber 3.

A light propagation direction of the optical amplifier 4-n inserted into the split first optical fiber 3-n is the unilateral direction, and therefore the backscattered light of the sensor light cannot pass through the optical amplifier 4-n. However, the first bypass fiber 7-n-g for bypassing the optical amplifier 4-n is wired in the optical communication system illustrated in FIG. 3, so that the backscattered light of the sensor light can return to the sensor device 9 through the first bypass fiber 7-n-g.

The sensor device 9 receives the backscattered light output from the optical path switching device 10, and senses the split first optical fiber 3-n on the basis of the backscattered light.

The sensor device 9 sends sensor light of the wavelength λ_{k-g}' to the second optical fiber 5 when sensing the split second optical fiber 5-n.

The sensor light sent to the second optical fiber 5 is sent to the split second optical fiber 5-n by the optical path switching device 10.

The sensor light sent to the split second optical fiber 5-n is scattered by the split second optical fiber 5-n, and backscattered light of the sensor light returns to the optical path switching device 10.

The optical path switching device 10 outputs the backscattered light to the sensor device 9 by sending the backscattered light to the second optical fiber 5.

A light propagation direction of the optical amplifier 6-n inserted into the split second optical fiber 5-n is the unilateral direction, and therefore the sensor light cannot pass through the optical amplifier 6-n. However, the second bypass fiber 8-n-g for bypassing the optical amplifier 6-n is wired in the optical communication system illustrated in FIG. 3, so that the sensor light can propagate to the counterpart device 2-n side through the second bypass fiber 8-n-g.

The sensor device 9 receives the backscattered light output from the optical path switching device 10, and senses the split second optical fiber 5-n on the basis of the backscattered light.

In above Embodiment 2, the optical communication system has been configured in such a way that the number of the counterpart devices 2 is N (N represents an integer equal to or more than two), each of the first optical fiber 3 and the second optical fiber 5 is split into the N fibers, and the optical communication system includes the optical path switching device 10 that is connected to each of the counterpart devices 2-n via each of the split first optical fibers 3-n and the split second optical fibers 5-n interposed therebetween. Furthermore, the optical communication system includes as the first bypass fiber 7-g a plurality of first bypass fibers 7-n-1 to 7-n-G that bypass the optical amplifier 4-n inserted into each of the split first optical fibers 3-n, and as the second bypass fiber 8-g a plurality of second bypass fibers 8-n-1 to 8-n-G that bypass the optical amplifier 6-n inserted into each of the split second optical fibers 5-n. Accordingly, even in the case where the optical communication system includes the N counterpart devices 2-1 to 2-N, it is possible to sense optical fibers for communication without wiring optical fibers for sensing that connect the communication device 1 and the counterpart devices 2-1 to 2-N.

Embodiment 3.

Embodiment 3 will describe an optical communication system including M (M represents an integer equal to or more than two) communication devices 1.

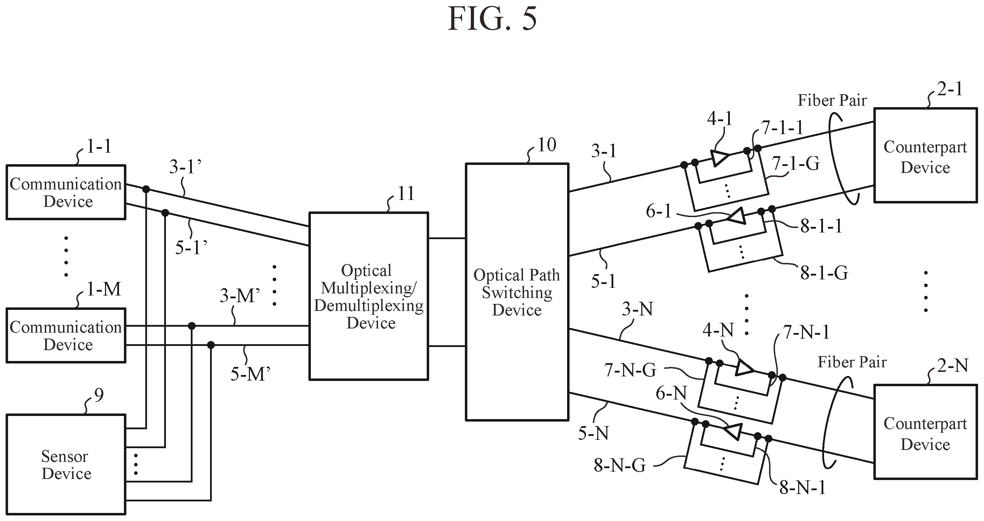

FIG. 5 is a configuration diagram illustrating the optical communication system according to Embodiment 3. Note that, in FIG. 5, the same reference numerals as those in FIGS. 1 and 3 indicate identical or corresponding parts, and therefore detailed description thereof will be omitted.

The optical communication system illustrated in FIG. 5 includes communication devices 1-1 to 1-M, the counterpart devices 2-1 to 2-N, first optical fibers 3-1' to 3-M', the split first optical fibers 3-1 to 3-N, the optical amplifiers 4-1 to 4-N, second optical fibers 5-1' to 5-M', the split second optical fibers 5-1 to 5-N, the optical amplifiers 6-1 to 6-N, the first bypass fibers 7-1-1 to 7-N-G, the second bypass fibers 8-1-1 to 8-N-G, the sensor device 9, the optical path switching device 10, and an optical multiplexing/demultiplexing device 11.

Each of the communication devices 1-1 to 1-M has the same function as that of the communication device 1 illustrated in FIG. 1.

A communication device 1-m (m = 1, ..., and M) is connected to the optical multiplexing/demultiplexing device 11 via a first optical fiber 3-m' interposed therebetween.

Furthermore, the communication device 1-m is connected to the optical multiplexing/demultiplexing device 11 via a second optical fiber 5-m' interposed therebetween.

Each of the first optical fibers 3-1' to 3-M' is implemented by, for example, a single-core or multi-core core wire of a single-mode or multi-mode fiber.

One end of the first optical fiber 3-m is connected to the communication device 1-m, and the other end of the first optical fiber 3-m is connected to the optical multiplexing/demultiplexing device 11.

Each of the second optical fibers 5-1' to 5-M' is implemented by, for example, a single-core or multi-core core wire of a single-mode or multi-mode fiber.

One end of a second optical fiber 5-m is connected to the communication device 1-m, and the other end of the second optical fiber 5-m is connected to the optical multiplexing/demultiplexing device 11.

The optical multiplexing/demultiplexing device 11 is implemented by, for example, a combination of a multiplexer and a demultiplexer, an Arrayed Waveguide Grating (AWG), or a WSS.

The optical multiplexing/demultiplexing device 11 multiplexes communication light transmitted from any one or more communication devices 1-m of the M communication devices 1-1 to 1-M, and outputs the multiplexed communication light to the optical path switching device 10.

The optical multiplexing/demultiplexing device 11 demultiplexes the communication light output from the optical path switching device 10, and outputs each beam of demultiplexed communication light to any one communication device 1-m of the M communication devices 1-1 to 1-M.

In the optical communication system illustrated in FIG. 5, wavelengths of communication light of the M communication devices 1-1 to 1-M related to the N counterpart devices 2-1 to 2-N are different from each other. A wavelength of communication light of the communication device 1-m (m = 1, ..., and M) related to the counterpart device 2-n (n = 1, ..., and N) is λ_{m-k, 1} to λ_{m-k, G}. More specifically, the wavelength of the communication light of the communication device 1-1 related to the counterpart device 2-1 is, for example, λ_{1-1, 1} to λ_{1-1, G}, and the wavelength of the communication light of the communication device 1-M related to the counterpart device 2-N is, for example, λ_{M-K, 1} to λ_{M-K, G}.

When transmitting communication light to the counterpart device 2-n (n = 1, ..., and N), the communication device 1-m (m = 1, ..., and M) transmits communication light of the wavelength λ_{m-k, g} to the optical multiplexing/demultiplexing device 11 through the first optical fiber 3-m'.

The optical multiplexing/demultiplexing device 11 multiplexes communication light transmitted from any one or more communication devices 1-m of the M communication devices 1-1 to 1-M.

The optical multiplexing/demultiplexing device 11 outputs the multiplexed communication light to the optical path switching device 10.

When the optical path switching device 10 receives the multiplexed communication light from the optical multiplexing/demultiplexing device 11, if the multiplexed communication light includes the communication light of the wavelength λ_{m-k, g}, the optical path switching device 10 outputs the communication light of the wavelength λ_{m-k, g} to the counterpart device 2-n by sending the communication light of the wavelength λ_{m-k, g} to the split first optical fiber 3-n.

The counterpart device 2-n transmits the communication light of the wavelength λ_{m-k, g} to the optical path switching device 10 by sending the communication light of the wavelength λ_{m-k, g} to the second optical fiber 5-n.

When receiving the communication light of the wavelength λ_{m-k, g} from the counterpart device 2-n, the optical path switching device 10 outputs the communication light of the wavelength λ_{m-k, g} to the optical multiplexing/demultiplexing device 11.

When receiving the communication light of the wavelength λ_{m-k, g} from the optical path switching device 10, the optical multiplexing/demultiplexing device 11 outputs the communication light of the wavelength λ_{m-k, g} to the communication device 1-m by sending the communication light of the wavelength λ_{m-k, g} to the second optical fiber 5-m'.

In the optical communication system illustrated in FIG. 5, wavelengths of sensor light of the M communication devices 1-1 to 1-M related to the N counterpart devices 2-1 to 2-N are different from each other. A wavelength of sensor light of the communication device 1-m (m = 1, ..., and M) related to the counterpart device 2-n (n = 1, ..., and N) is λ_{m-k, g}'. More specifically, the wavelength of the sensor light of the communication device 1-1 related to the counterpart device 2-1 is, for example, λ_{1-1, g}', and the wavelength of the sensor light of the communication device 1-M related to the counterpart device 2-N is, for example, λ_{M-K, g}'.

The sensor device 9 sends sensor light of a wavelength λ_{m-k, g}' to the first optical fiber 3-m when sensing the split first optical fiber 3-n (n = 1, ..., and N).

The sensor light of the wavelength λ_{m-k, g}' sent to the first optical fiber 3-m is output to the optical path switching device 10 through the optical multiplexing/demultiplexing device 11, and the sensor light of the wavelength λ_{m-k, g}' is sent to the split first optical fiber 3-n by the optical path switching device 10.

The sensor light sent to the split first optical fiber 3-n is scattered by the split first optical fiber 3-n, and backscattered light of the sensor light returns to the optical path switching device 10.

The optical path switching device 10 outputs the backscattered light to the optical multiplexing/demultiplexing device 11.

The optical multiplexing/demultiplexing device 11 outputs the backscattered light to the sensor device 9 by sending the backscattered light to the first optical fiber 3-m'.

The sensor device 9 receives the backscattered light output from the optical multiplexing/demultiplexing device 11, and senses the split first optical fiber 3-n on the basis of the backscattered light.

The sensor device 9 sends sensor light of the wavelength λ_{m-k, g}' to the second optical fiber 5-n when sensing the split second optical fiber 5-n.

The sensor light sent to the second optical fiber 5 is output to the optical path switching device 10 through the optical multiplexing/demultiplexing device 11, and the sensor light of the wavelength λ_{m-k, g}' is sent to the split second optical fiber 5-n by the optical path switching device 10.

The sensor light sent to the split second optical fiber 5-n is scattered by the split second optical fiber 5-n, and backscattered light of the sensor light returns to the optical path switching device 10.

The optical path switching device 10 outputs the backscattered light to the optical multiplexing/demultiplexing device 11.

The optical multiplexing/demultiplexing device 11 outputs the backscattered light to the sensor device 9 by sending the backscattered light to the second optical fiber 5-m'.

The sensor device 9 receives the backscattered light output from the optical multiplexing/demultiplexing device 11, and senses the split second optical fiber 5-n on the basis of the backscattered light.

In above Embodiment 3, the optical communication system has been configured in such a way that the number of communication devices is M (M represents an integer equal to or more than two), and the optical communication system includes the optical multiplexing/demultiplexing device 11 that multiplexes communication light transmitted from any one or more communication devices 1-m of the M communication devices 1-1 to 1-M, outputs the multiplexed communication light to the optical path switching device 10, demultiplexes the communication light output from the optical path switching device 10, and outputs each beam of demultiplexed communication light to any one communication device 1-m of the M communication devices 1-1 to 1-M. Accordingly, even in the case where the optical path switching device 10 includes the M communication devices 1-1 to 1-M, it is possible to sense optical fibers for communication without wiring optical fibers for sensing that connect the communication devices 1-1 to 1-M and the counterpart devices 2-1 to 2-N.

### Embodiment 4.

Embodiment 4 will describe an optical communication system including P (P represents an integer equal to or more than two) sensor devices 9-1 to 9-P.

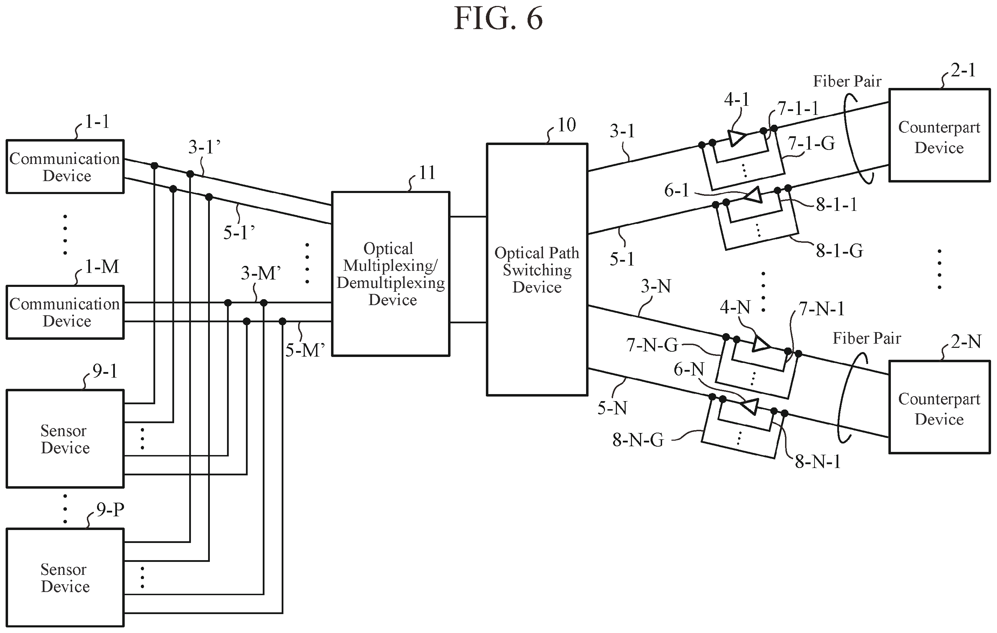

FIG. 6 is a configuration diagram illustrating the optical communication system according to Embodiment 4. Note that, in FIG. 6, the same reference numerals as those in FIGS. 1, 3, and 5 indicate identical or corresponding parts, and therefore detailed description thereof will be omitted.

The optical communication system illustrated in FIG. 6 includes the communication devices 1-1 to 1-M, the counterpart devices 2-1 to 2-N, the first optical fibers 3-1' to 3-M', the split first optical fibers 3-1 to 3-N, the optical amplifiers 4-1 to 4-N, the second optical fibers 5-1' to 5-M', the split second optical fibers 5-1 to 5-N, the optical amplifiers 6-1 to 6-N, the first bypass fibers 7-1-1 to 7-N-G, the second bypass fibers 8-1-1 to 8-N-G, the sensor devices 9-1 to 9-P, the optical path switching device 10, and the optical multiplexing/demultiplexing device 11.

Each of the sensor devices 9-1 to 9-P has the same function as that of the sensor device 9 illustrated in FIG. 1.

The sensor device 9-1 sends, for example, sensor light for temperature change detection, the sensor device 9-2 sends, for example, sensor light for vibration change detection, and the sensor device 9-P sends, for example, sensor light for stress change detection. Wavelengths of these P beams of sensor light are mutually different wavelengths.

Next, an operation of the optical communication system illustrated in FIG. 6 will be described. In this regard, the components other than the sensor devices 9-1 to 9-P are the same as those of the optical communication system illustrated in FIG. 5. Hence, an operation of the sensor devices 9-1 to 9-P will be mainly described hereinafter.

When sensing the split first optical fiber 3-n (n = 1, ..., and N), any one sensor device 9-p (p = 1, ..., and P) of the P sensor devices 9-1 to 9-P transmits sensor light to the optical multiplexing/demultiplexing device 11 by sending the sensor light to the first optical fiber 3-m (m = 1, ..., and M).

When, for example, detecting a temperature change in the split first optical fiber 3-n, the sensor device 9-1 sends the sensor light, and, when, for example, detecting a vibration change in the split first optical fiber 3-n, the sensor device 9-2 sends the sensor light.

The optical multiplexing/demultiplexing device 11 outputs to the optical path switching device 10 the sensor light transmitted from the sensor device 9-p, and outputs to the sensor device 9-p backscattered light of the sensor light output from the optical path switching device 10.

The sensor device 9-p receives the backscattered light output from the optical multiplexing/demultiplexing device 11, and senses the split first optical fiber 3-n on the basis of the backscattered light.

When sensing the split second optical fiber 5-n, any one sensor device 9-p of the P sensor devices 9-1 to 9-P transmits sensor light to the optical multiplexing/demultiplexing device 11 by sending the sensor light to the second optical fiber 5-m.

When, for example, detecting a temperature change in the split second optical fiber 5-n, the sensor device 9-1 sends the sensor light, and, when, for example, detecting a vibration change in the split second optical fiber 5-n, the sensor device 9-2 sends the sensor light.

The optical multiplexing/demultiplexing device 11 outputs to the optical path switching device 10 the sensor light transmitted from the sensor device 9-p, and outputs to the sensor device 9-p backscattered light of the sensor light output from the optical path switching device 10.

The sensor device 9-p receives the backscattered light output from the optical multiplexing/demultiplexing device 11, and senses the split second optical fiber 5-n on the basis of the backscattered light.

In above Embodiment 4, the optical communication system has been configured in such a way that the number of the sensor devices 9 is P (P represents an integer equal to or more than two), and the optical multiplexing/demultiplexing device 11 outputs to the optical path switching device 10 the sensor light transmitted from each of the P sensor devices, and outputs to the sensor device 9-p backscattered light output from the optical path switching device 10. Accordingly, the optical communication system can sense optical fibers for communication without wiring optical fibers for sensing that connect the communication devices 1-1 to 1-M and the counterpart devices 2-1 to 2-N, and, in addition, detect a plurality of types of changes in the optical fibers for communication.

### Embodiment 5.

Embodiment 5 will describe an optical communication system in which an optical multiplexing/demultiplexing device 12 outputs, to the sensor device 9, backscattered light in a pass wavelength band range of the backscattered light output from the optical path switching device 10, and blocks backscattered light outside the pass wavelength band range.

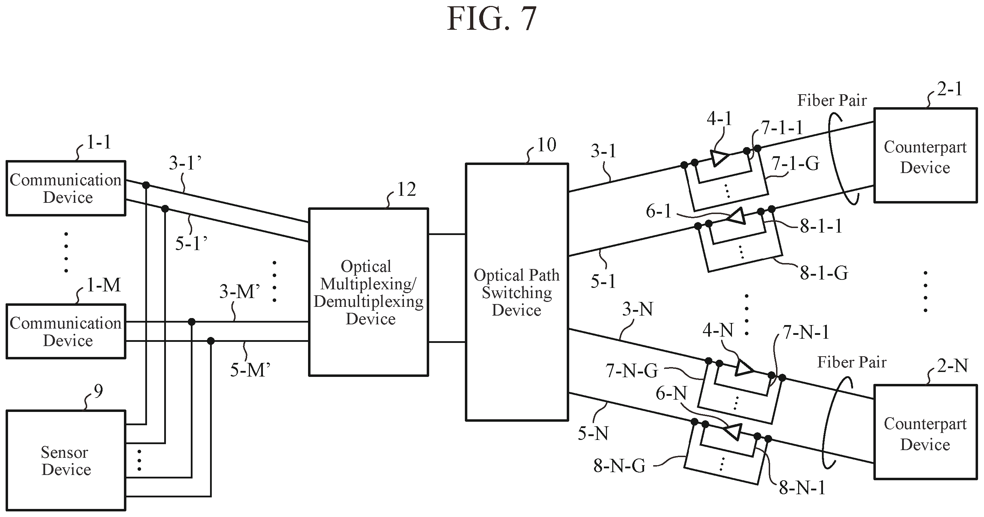

FIG. 7 is a configuration diagram illustrating the optical communication system according to Embodiment 5. Note that, in FIG. 7, the same reference numerals as those in FIGS. 1, 3, 5, and 6 indicate identical or corresponding parts, and therefore detailed description thereof will be omitted.

The optical communication system illustrated in FIG. 7 includes the communication devices 1-1 to 1-M, the counterpart devices 2-1 to 2-N, the first optical fibers 3-1' to 3-M', the split first optical fibers 3-1 to 3-N, the optical amplifiers 4-1 to 4-N, the second optical fibers 5-1' to 5-M', the split second optical fibers 5-1 to 5-N, the optical amplifiers 6-1 to 6-N, the first bypass fibers 7-1-1 to 7-N-G, the second bypass fibers 8-1-1 to 8-N-G, the sensor device 9, the optical path switching device 10, and the optical multiplexing/demultiplexing device 12.

The optical multiplexing/demultiplexing device 12 is implemented by, for example, a combination of a multiplexer and a demultiplexer, an AWG, or a WSS.

Similarly to the optical multiplexing/demultiplexing device 11 illustrated in FIG. 5, the optical multiplexing/demultiplexing device 12 multiplexes communication light transmitted from any one or more communication devices 1-m of the M communication devices 1-1 to 1-M, and outputs the multiplexed communication light to the optical path switching device 10.

The optical multiplexing/demultiplexing device 12 demultiplexes the communication light output from the optical path switching device 10, and outputs each beam of demultiplexed communication light to any one communication device 1-m of the M communication devices 1-1 to 1-M.

Unlike the optical multiplexing/demultiplexing device 11 illustrated in FIG. 5, the optical multiplexing/demultiplexing device 12 outputs, to the sensor device 9, backscattered light in the pass wavelength band range of the backscattered light output from the optical path switching device 10, and blocks backscattered light outside the pass wavelength band range.

In the optical communication system illustrated in FIG. 7, the optical multiplexing/demultiplexing device 12 is applied to the optical communication system illustrated in FIG. 5. However, this is merely an example, and the optical multiplexing/demultiplexing device 12 may be applied to the optical communication system illustrated in FIG. 6.

Next, an operation of the optical communication system illustrated in FIG. 7 will be described. In this regard, the components other than the optical multiplexing/demultiplexing device 12 are the same as those of the optical communication system illustrated in FIG. 5. Hence, only an operation of the optical multiplexing/demultiplexing device 12 will be described hereinafter.

When sensing the split first optical fiber 3-n (n = 1, ..., and N) or when sensing the split second optical fiber 5-n, the optical multiplexing/demultiplexing device 12 acquires backscattered light output from the optical path switching device 10.

The optical multiplexing/demultiplexing device 12 includes, for example, a band pass filter that has a desired pass wavelength band range. Alternatively, the optical multiplexing/demultiplexing device 12 selects a wavelength by the WSS in such a way that the wavelength has the desired pass wavelength band range.

By giving the backscattered light to the band pass filter or the WSS, the optical multiplexing/demultiplexing device 12 outputs to the sensor device 9 the backscattered light output from the optical path switching device 10 if the backscattered light output from the optical path switching device 10 is backscattered light in the pass wavelength band range.

The optical multiplexing/demultiplexing device 12 blocks the backscattered light output from the optical path switching device 10 if the backscattered light output from the optical path switching device 10 is backscattered light outside the pass wavelength band range.

In above Embodiment 5, the optical communication system has been configured in such a way that the optical multiplexing/demultiplexing device 12 outputs, to the sensor device 9, backscattered light in the pass wavelength band range of the backscattered light output from the optical path switching device 10, and blocks backscattered light outside the pass wavelength band range. Accordingly, the optical communication system can sense optical fibers for communication without wiring optical fibers for sensing that connect the communication devices 1-1 to 1-M and the counterpart devices 2-1 to 2-N, and, in addition, prevent deterioration of sensing accuracy due to noise or the like.

### Embodiment 6.

Embodiment 6 will describe an optical communication system in which the optical multiplexing/demultiplexing device 11 includes a first optical multiplexer/demultiplexer 11a and a second optical multiplexer/demultiplexer 11b.

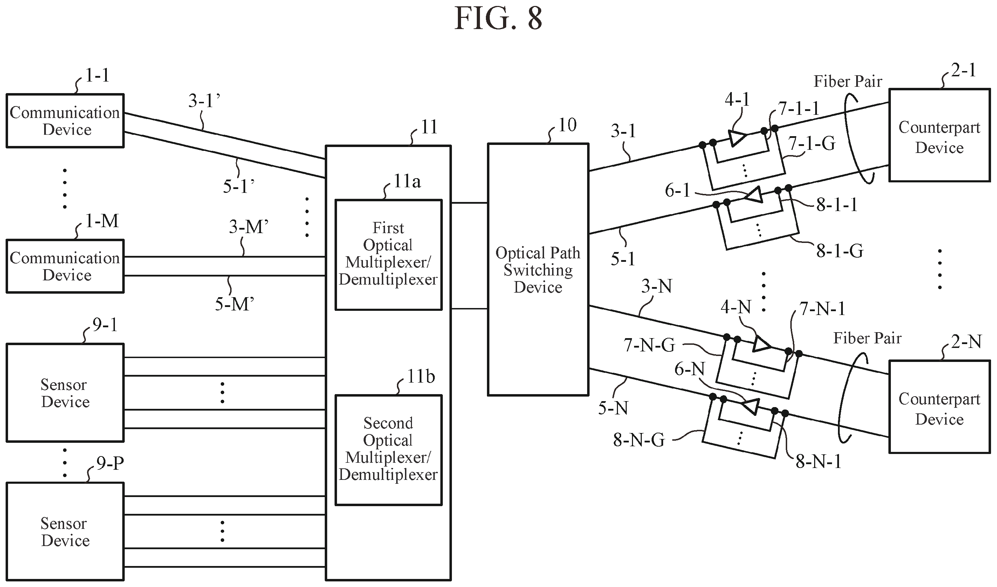

FIG. 8 is a configuration diagram illustrating the optical communication system according to Embodiment 6. Note that, in FIG. 8, the same reference numerals as those in FIGS. 1, 3, and 5 to 7 indicate identical or corresponding parts, and therefore detailed description thereof will be omitted.

The optical communication system illustrated in FIG. 8 includes the communication devices 1-1 to 1-M, the counterpart devices 2-1 to 2-N, the first optical fibers 3-1' to 3-M', the split first optical fibers 3-1 to 3-N, the optical amplifiers 4-1 to 4-N, the second optical fibers 5-1' to 5-M', the split second optical fibers 5-1 to 5-N, the optical amplifiers 6-1 to 6-N, the first bypass fibers 7-1-1 to 7-N-G, the second bypass fibers 8-1-1 to 8-N-G, the sensor devices 9-1 to 9-P, the optical path switching device 10, the first optical multiplexer/demultiplexer 11a, and the second optical multiplexer/demultiplexer 11b.

The first optical multiplexer/demultiplexer 11a is implemented by, for example, a combination of a multiplexer and a demultiplexer, an AWG, or a WSS.

The first optical multiplexer/demultiplexer 11a multiplexes communication light transmitted from any one or more communication devices 1-m of the M communication devices 1-1 to 1-M, and outputs the multiplexed communication light to the optical path switching device 10.

The first optical multiplexer/demultiplexer 11a demultiplexes the communication light output from the optical path switching device 10, and outputs each beam of demultiplexed communication light to any one communication device 1-m of the M communication devices 1-1 to 1-M.

The second optical multiplexer/demultiplexer 11b is implemented by, for example, a combination of a multiplexer and a demultiplexer, an AWG, or a WSS.

The second optical multiplexer/demultiplexer 11b outputs to the optical path switching device 10 the sensor light transmitted from any one or more sensor device 9-p (p = 1, ..., and P) of the P sensor devices 9-1 to 9-P.

The second optical multiplexer/demultiplexer 11b outputs the backscattered light of sensor light output from the optical path switching device 10, to the sensor device 9-n that is a transmission source of the sensor light.

The optical communication system illustrated in FIG. 8 is configured by applying the first optical multiplexer/demultiplexer 11a and the second optical multiplexer/demultiplexer 11b to the optical multiplexing/demultiplexing device 11 of the optical communication system illustrated in FIG. 6. However, this is merely an example, and the first optical multiplexer/demultiplexer 11a and the second optical multiplexer/demultiplexer 11b may be applied to the optical multiplexing/demultiplexing device 11 of the optical communication system illustrated in FIG. 5, or the optical multiplexing/demultiplexing device 12 of the optical communication system illustrated in FIG. 7.

In the optical communication system illustrated in FIG. 8, the optical multiplexing/demultiplexing device 11 includes the second optical multiplexer/demultiplexer 11b for multiplexing sensor light and demultiplexing backscattered light in addition to the first optical multiplexer/demultiplexer 11a for multiplexing and/or demultiplexing communication light.

Consequently, the optical multiplexing/demultiplexing device 11 illustrated in FIG. 8 can reduce interference between communication light and sensor light or interference between communication light and backscattered light, as compared to the optical multiplexing/demultiplexing device including optical multiplexers/demultiplexers that can perform, for example, both multiplexing/demultiplexing of communication light and multiplexing/demultiplexing of sensor light.

### Embodiment 7.

Embodiment 7 will describe an optical communication system including a selection device 13 that connects any one sensor device 9-p (p = 1, ..., and P) of the P sensor devices 9-1 to 9-P to the optical multiplexing/demultiplexing device 11.

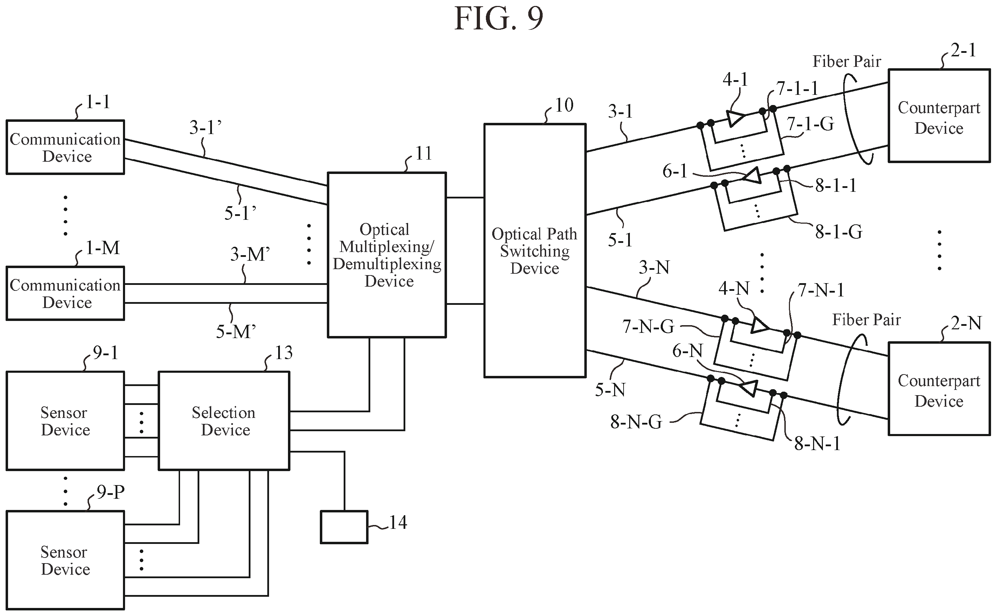

FIG. 9 is a configuration diagram illustrating the optical communication system according to Embodiment 7. Note that, in FIG. 9, the same reference numerals as those in FIGS. 1, 3, and 5 to 8 indicate identical or corresponding parts, and therefore detailed description thereof will be omitted.

The optical communication system illustrated in FIG. 9 includes the communication devices 1-1 to 1-M, the counterpart devices 2-1 to 2-N, the first optical fibers 3-1' to 3-M', the split first optical fibers 3-1 to 3-N, the optical amplifiers 4-1 to 4-N, the second optical fibers 5-1' to 5-M', the split second optical fibers 5-1 to 5-N, the optical amplifiers 6-1 to 6-N, the first bypass fibers 7-1-1 to 7-N-G, the second bypass fibers 8-1-1 to 8-N-G, the sensor devices 9-1 to 9-P, the optical path switching device 10, the optical multiplexing/demultiplexing device 11, the selection device 13, and an optical terminator 14.

The selection device 13 includes a plurality of input/output ports, and the P sensor devices 9-1 to 9-P and the optical multiplexing/demultiplexing device 11 are connected to the mutually different input/output ports.

The selection device 13 connects any one sensor device 9-p (p = 1, ..., and P) of the P sensor devices 9-1 to 9-P to the optical multiplexing/demultiplexing device 11.

One input/output port (one end) of the plurality of input/output ports included in the selection device 13 is optically terminated by the optical terminator 14.

The optical terminator 14 is a terminator that terminates one end of the selection device 13.

In the optical communication system illustrated in FIG. 9, the selection device 13 is provided outside the optical multiplexing/demultiplexing device 11. However, this is merely an example, and, for example, the selection device 13 may be provided inside the optical multiplexing/demultiplexing device 11.

Next, an operation of the optical communication system illustrated in FIG. 9 will be described. In this regard, the components other than the selection device 13 are the same as those of the optical communication system illustrated in FIG. 6. Hence, an operation of the selection device 13 will be mainly described hereinafter.

The selection device 13 connects any one sensor device 9-p (p = 1, ..., and P) of the P sensor devices 9-1 to 9-P to the optical multiplexing/demultiplexing device 11.

When the sensor device 9-p (p = 1, ..., and P) is connected to the optical multiplexing/demultiplexing device 11 by the selection device 13, sensor light transmitted from the sensor device 9-p is output to the optical multiplexing/demultiplexing device 11 via the selection device 13. Furthermore, backscattered light output from the optical multiplexing/demultiplexing device 11 is output to the sensor device 9-p via the selection device 13.

One input/output port of the plurality of input/output ports included in the selection device 13 is optically terminated by the optical terminator 14. Consequently, when the sensor device 9-p transmits sensor light, if, for example, the counterpart device 2-n transmits the sensor light, the sensor light transmitted from the counterpart device 2-n is optically terminated, so that it is possible to prevent multiple reflection of the sensor light.

In above Embodiment 7, the optical communication system has been configured to include the selection device 13 that connects any one sensor device 9-p of the P sensor devices 9-1 to 9-P to the optical multiplexing/demultiplexing device 11. Accordingly, the optical communication system can detect a plurality of types of changes of the optical fibers for communication without wiring optical fibers for sensing that connect the communication devices 1-1 to 1-M and the counterpart devices 2-1 to 2-N.

### Embodiment 8.

Embodiment 8 will describe an optical communication system in which the first bypass fiber 7-g (g = 1, ..., and G) includes wavelength division multiplex filters 7a or wavelength division multiplex couplers 7b as connection parts for the first optical fiber 3, and the second bypass fiber 8-g includes wavelength division multiplex filters 8a or wavelength division multiplex couplers 8b as connection parts for the second optical fiber 5.

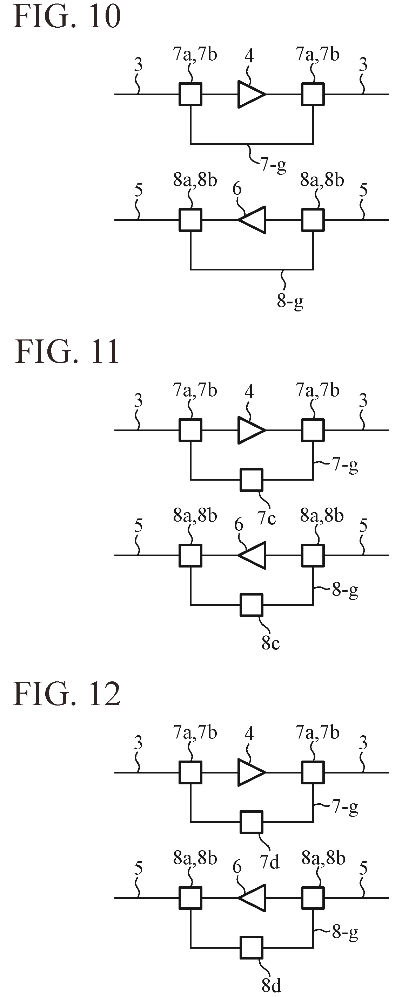

FIG. 10 is a configuration diagram illustrating part of the optical communication system according to Embodiment 8. Note that, in FIG. 10, the same reference numerals as those in FIGS. 1, 3, and 5 to 9 indicate identical or corresponding parts, and therefore detailed description thereof will be omitted.

The first bypass fiber 7-g (g = 1, ..., and G) includes the wavelength division multiplex filters 7a or the wavelength division multiplex couplers 7b as the connection parts for the first optical fiber 3.

The second bypass fiber 8-g includes the wavelength division multiplex filters 8a or the wavelength division multiplex couplers 8b as the connections parts for the second optical fiber 5.

In the optical communication system illustrated in FIG. 10, the wavelength division multiplex filters 7a or 8a or the wavelength division multiplex couplers 7b or 8b are applied to the optical communication system illustrated in FIG. 1. However, this is merely an example, and the wavelength division multiplex filters 7a or 8a or the wavelength division multiplex couplers 7b or 8b may be applied to the optical communication system illustrated in FIGS. 3, and 5 to 9.

In the optical communication system illustrated in FIG. 10, the first bypass fiber 7-g includes the wavelength division multiplex filters 7a or the wavelength division multiplex couplers 7b as the connection parts for the first optical fiber 3, and the second bypass fiber 8-g includes the wavelength division multiplex filters 8a or the wavelength division multiplex couplers 8b as the connection parts for the second optical fiber 5. The wavelength division multiplex filters 7a and 8b and the wavelength division multiplex couplers 7b and 8b are passive parts. Consequently, even if, for example, monitoring control communication cannot be established between devices, and each of the connection parts for the first optical fiber 3 and the connection parts for the second optical fiber 5 cannot be actively controlled, or even if power supply of the optical amplifiers 4 and 6 is cut off, it is possible to sense optical fibers for communication.

### Embodiment 9.

Embodiment 9 will describe an optical communication system in which the first bypass fiber 7-g (g = 1, ..., and G) includes a bidirectional optical amplifier 7c that does not include an optical isolator, and the second bypass fiber 8-g includes a bidirectional optical amplifier 8c that does not include an optical isolator.

FIG. 11 is a configuration diagram illustrating part of the optical communication system according to Embodiment 9. Note that, in FIG. 11, the same reference numerals as those in FIGS. 1, 3, and 5 to 10 indicate identical or corresponding parts, and therefore detailed description thereof will be omitted.

The optical amplifier 7c is implemented by, for example, a Semiconductor Optical Amplifier (SOA).

The optical amplifier 7c is inserted into the first bypass fiber 7-g (g = 1, ..., and G).

The optical amplifier 7c is a bidirectional optical amplifier that does not include an optical isolator, and amplifies each beam of sensor light and backscattered light.

The optical amplifier 8c is implemented by, for example, an SOA.

The optical amplifier 8c is inserted into the second bypass fiber 8-g (g = 1, ..., and G).

The optical amplifier 8c is a bidirectional optical amplifier that does not include an optical isolator, and amplifies each beam of sensor light and backscattered light.

In the optical communication system illustrated in FIG. 11, each of the optical amplifier 7c and the optical amplifier 8c is applied to the optical communication system illustrated in FIG. 1. However, this is merely an example, and each of the optical amplifier 7c and the optical amplifier 8c may be applied to the optical communication system illustrated in FIG. 3 or one of FIGS. 5 to 10.

In the optical communication system illustrated in FIG. 11, because the optical amplifier 7c is inserted into the first bypass fiber 7-g, sensor light and backscattered light to be propagated by the first bypass fiber 7-g are amplified.

The optical amplifier 7c is a bidirectional optical amplifier, so that each beam of the sensor light and the backscattered light can pass through the optical amplifier 7c.

Furthermore, because the optical amplifier 8c is inserted into the second bypass fiber 8-g, sensor light and backscattered light to be propagated by the second bypass fiber 8-g are amplified.

The optical amplifier 8c is a bidirectional optical amplifier, so that each beam of the sensor light and the backscattered light can pass through the optical amplifier 8c.

Consequently, the optical communication system illustrated in FIG. 11 can enhance sensing accuracy of the sensor device 9, as compared to the optical communication system illustrated in FIG. 1.

### Embodiment 10.

Embodiment 10 will describe an optical communication system in which the first bypass fiber 7-g (g = 1, ..., and G) includes an optical band pass filter 7d that allows sensor light and backpropagation light to pass, and the second bypass fiber 8-g includes an optical band pass filter 8d that allows sensor light and backpropagation light to pass.

FIG. 12 is a configuration diagram illustrating part of the optical communication system according to Embodiment 10. Note that, in FIG. 12, the same reference numerals as those in FIGS. 1, 3, and 5 to 11 indicate identical or corresponding parts, and therefore detailed description thereof will be omitted.

The optical band pass filter 7d is implemented by, for example, dielectric multilayer film or a diffraction grating.

The optical band pass filter 7d is inserted into the first bypass fiber 7-g (g = 1, ..., and G).

The optical band pass filter 7d allows the sensor light and the backpropagation light to pass, and blocks noise or the like from passing.

The optical band pass filter 8d is implemented by, for example, a dielectric multilayer film or a diffraction grating.

The optical band pass filter 8d is inserted into the second bypass fiber 8-g (g = 1, ..., and G).

The optical band pass filter 8d allows the sensor light and the backpropagation light to pass, and blocks noise or the like from passing.

In the optical communication system illustrated in FIG. 12, each of the optical band pass filter 7d and the optical band pass filter 8d is applied to the optical communication system illustrated in FIG. 1. However, this is merely an example, and each of the optical band pass filter 7d and the optical band pass filter 8d may be applied to the optical communication system illustrated in FIG. 3 or one of FIGS. 5 to 11.

In the optical communication system illustrated in FIG. 12, the optical band pass filter 7d is inserted into the first bypass fiber 7-g, so that it is possible to block noise or the like from passing while allowing each beam of sensor light and backscattered light to be propagated by the first bypass fiber 7-g to pass.

Furthermore, the optical band pass filter 8d is inserted into the second bypass fiber 8-g, so that it is possible to block noise or the like from passing while allowing each beam of sensor light and backscattered light to be propagated by the second bypass fiber 8-g to pass.

Consequently, the optical communication system illustrated in FIG. 12 can enhance sensing accuracy of the sensor device 9, as compared to the optical communication system illustrated in FIG. 1.

### Embodiment 11.

Embodiment 11 will describe an optical communication system in which a third optical fiber 15 is connected to the optical path switching device 10.

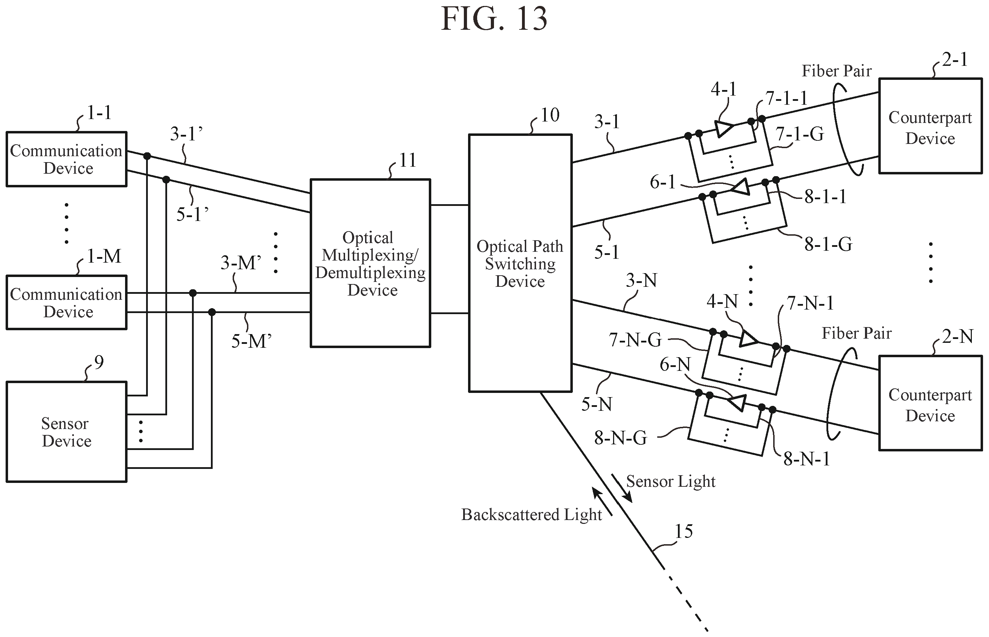

FIG. 13 is a configuration diagram illustrating the optical communication system according to Embodiment 11. Note that, in FIG. 13, the same reference numerals as those in FIGS. 1, 3, and 5 to 12 indicate identical or corresponding parts, and therefore detailed description thereof will be omitted.

The third optical fiber 15 is implemented by, for example, a single-core or multi-core core wire of a single-mode or multi-mode fiber.

The third optical fiber 15 is a sensor dedicated optical fiber having one end connected to the optical path switching device 10.

The optical communication system illustrated in FIG. 13 is configured by applying the third optical fiber 15 to the optical communication system illustrated in FIG. 5. However, this is merely an example, and the third optical fiber 15 may be applied to the optical communication system illustrated in FIG. 3 or one of FIGS. 6 to 12.

In the optical communication system illustrated in FIG. 13, the third optical fiber 15 is connected to the optical path switching device 10 in addition to the split first optical fibers 3-1 to 3-N and the split second optical fibers 5-1 to 5-N. Consequently, it is possible to sense not only the split first optical fibers 3-1 to 3-N and the split second optical fibers 5-1 to 5-N, but also the third optical fiber 15.

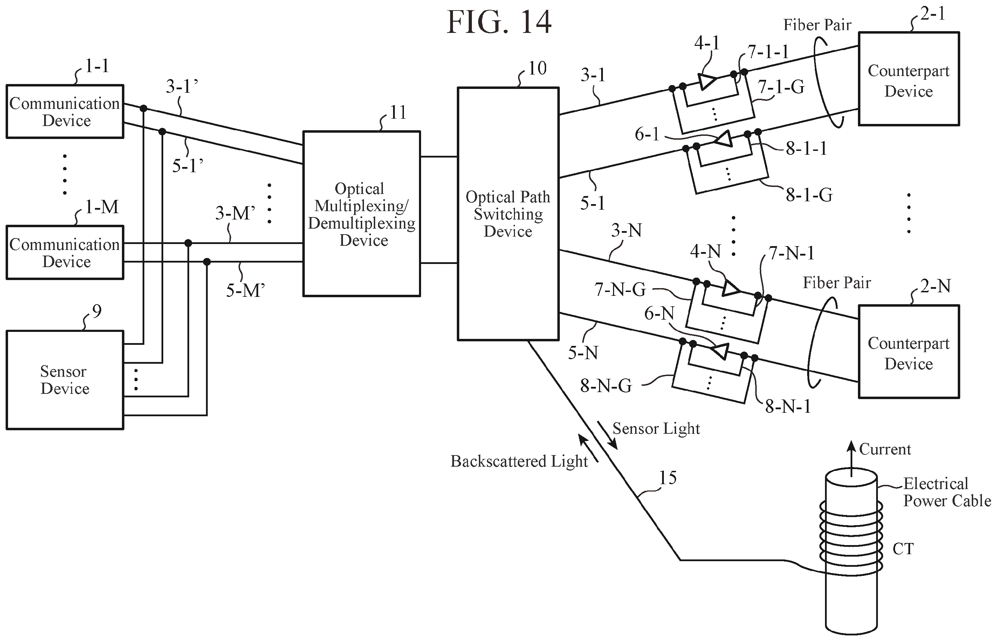

FIG. 14 is a configuration diagram illustrating another optical communication system according to Embodiment 11.

As illustrated in FIG. 14, the third optical fiber 15 may be wound around an electrical power cable to implement a Current Transformer (CT) that measures a current flowing in the electrical power cable.

Even in this case, too, it is possible to sense not only the split first optical fibers 3-1 to 3-N and the split second optical fibers 5-1 to 5-N, but also the third optical fiber 15.

### Embodiment 12.

In Embodiments 1 to 11, the optical communication system includes a plurality of first bypass fibers 7-g (g = 1, ..., and G) and 7-n-g that bypass the optical amplifiers 4 and 4-n inserted into the first optical fibers 3 and 3-n (n = 1, ..., and N), and a plurality of second bypass fibers 8-g and 8-n-g that bypass the optical amplifiers 6 and 6-n inserted into the second optical fibers 5 and 5-n.

Embodiment 12 will describe the optical communication system in which one or more communication light bypass fibers 21 are wired in the first optical fiber 3 (or the split first optical fiber 3-n) to connect the plurality of optical amplifiers 4 (or optical amplifiers 4-n) in parallel, and, moreover, one or more communication light bypass fibers 22 are wired in the second optical fiber 5 (or the split second optical fiber 5-n) to connect the plurality of optical amplifiers 6 (or optical amplifiers 6-n) in parallel.

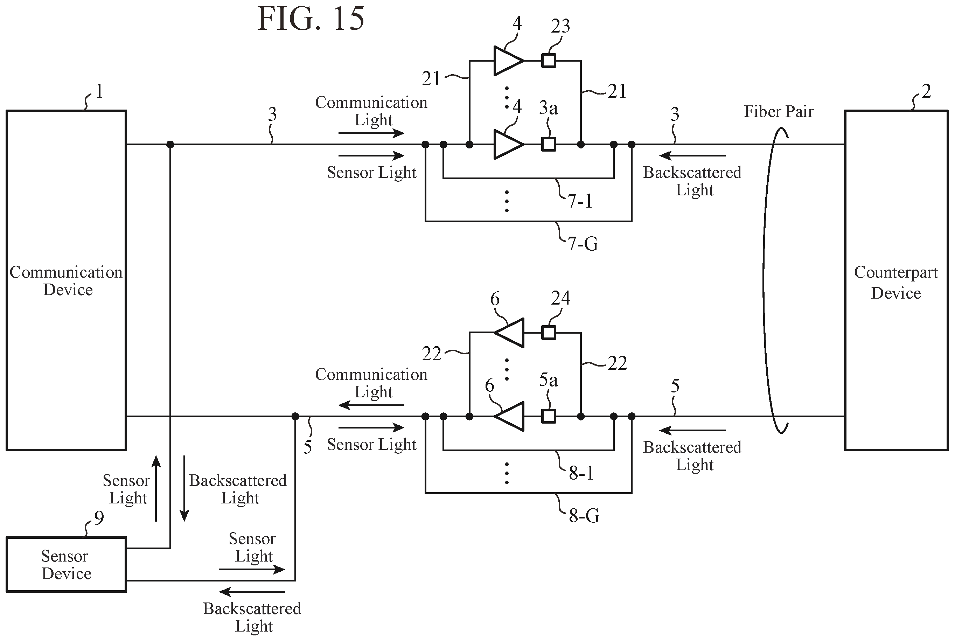

FIG. 15 is a configuration diagram illustrating the optical communication system according to Embodiment 12. Note that, in FIG. 15, the same reference numerals as those in FIGS. 1, 3, and 5 to 14 indicate identical or corresponding parts, and therefore detailed description thereof will be omitted.

In the optical communication system illustrated in FIG. 15, a band pass filter 3a is inserted into serial to the optical amplifier 4 (or the optical amplifier 4-n), and the band pass filter 5a is inserted into serial to the optical amplifier 6 (or the optical amplifier 6-n).

The band pass filters 23 having mutually different pass wavelength band ranges are inserted into any one or more communication light bypass fibers 21, and the pass wavelength band ranges of the band pass filters 23 are different from the pass wavelength band range of the band pass filter 3a.

Furthermore, the band pass filters 24 having mutually different pass wavelength band ranges are inserted into any one or more communication light bypass fibers 22, and the pass wavelength band ranges of the band pass filters 24 are different from the pass wavelength band range of the band pass filter 5a.

Consequently, the communication devices 1 and 1-m (m = 1, ..., and M) and the counterpart devices 2 and 2-n can transmit and receive a plurality of beams of communication light having mutually different wavelengths.

Note that in the present disclosure, the embodiments may be freely combined, or any component of each embodiment may be modified or omitted.

### INDUSTRIAL APPLICABILITY

The present disclosure is suitable for an optical communication system.

### REFERENCE SIGNS LIST

1: Communication device, 2, 2-1 to 2-N: Counterpart device, 3, 3-1' to 3-M': First optical fiber, 3-1 to 3-N: Split first optical fiber, 3a: Band pass filter, 4, 4-1 to 4-N: Optical amplifier, 5, 5-1' to 5-M': Second optical fiber, 5-1 to 5-N: Split second optical fiber, 5a: Band pass filter, 6, 6-1 to 6-N: Optical amplifier, 7-1 to 7-G, 7-1-1 to 7-N-G: First bypass fiber, 7a: Wavelength division multiplex filter, 7b: Wavelength division multiplex coupler, 7c: Optical amplifier, 7d: Optical band pass filter, 8-1 to 8-G, 8-1-1 to 8-N-G: Second bypass fiber, 8a: Wavelength division multiplex filter, 8b: Wavelength division multiplex coupler, 8c: Optical amplifier, 8d: Optical band pass filter, 9, 9-1 to 9-P: Sensor device, 10: Optical path switching device, 11: Optical multiplexing/demultiplexing device, 11a: First optical multiplexer/demultiplexer, 11b: Second optical multiplexer/demultiplexer, 12: Optical multiplexing/demultiplexing device, 13: Selection device, 14: Optical terminator, 15: Third optical fiber, 21, 22 : Communication light bypass fiber, 23, 24: Band pass filter

## Claims

1. An optical communication system comprising:
a first optical fiber to cause communication light transmitted from a communication device to propagate to a counterpart device;
a second optical fiber to cause communication light transmitted from the counterpart device to propagate to the communication device;
a plurality of first bypass fibers to bypass an optical amplifier inserted into the first optical fiber;
a plurality of second bypass fibers to bypass an optical amplifier inserted into the second optical fiber; and
a sensor device to send sensor light to one of the first optical fiber and the second optical fiber, and receive backscattered light having returned from one of the first optical fiber and the second optical fiber.

2. The optical communication system according to claim 1, wherein
a number of the counterpart devices is N (N represents an integer equal to or more than two) , and
the optical communication system further comprises:
an optical path switching device to split each of the first optical fiber and the second optical fiber into N fibers, the optical path switching device being connected to each of the counterpart devices with each of the split first optical fibers and each of the split second optical fibers interposed therebetween;
a plurality of first bypass fibers as the first bypass fibers to bypass optical amplifiers inserted into the split first optical fibers; and
a plurality of second bypass fibers as the second bypass fibers to bypass optical amplifiers inserted into the split second optical fibers.

3. The optical communication system according to claim 2, wherein
a number of the communication devices is M (M represents an integer equal to or more than two), and
the optical communication system further comprises an optical multiplexing/demultiplexing device to multiplex communication light transmitted from one or more communication devices of the M communication devices, output the multiplexed communication light to the optical path switching device, demultiplex the communication light output from the optical path switching device, and output each demultiplexed communication light to any one communication device of the M communication devices.

4. The optical communication system according to claim 3, wherein the optical multiplexing/demultiplexing device sends the sensor light transmitted from the sensor device, to one of the split first optical fibers and the split second optical fibers through the optical path switching device, and outputs to the sensor device the backscattered light having returned from one of the split first optical fibers and the split second optical fibers.

5. The optical communication system according to claim 3, wherein
a number of the sensor devices is P (P represents an integer equal to or more than two), and
the optical multiplexing/demultiplexing device outputs to the optical path switching device the sensor light transmitted from each of the P sensor devices, and outputs the backscattered light output from the optical path switching device to the sensor device that is a transmission source of the sensor light.

6. The optical communication system according to claim 3, wherein the optical multiplexing/demultiplexing device outputs, to the sensor device, backscattered light in a pass wavelength band range of the backscattered light output from the optical path switching device, and block backscattered light outside the pass wavelength band range.

7. The optical communication system according to claim 5, wherein the optical multiplexing/demultiplexing device includes
a first optical multiplexer/demultiplexer to multiplex communication light transmitted from one or more communication devices of the M communication devices, output the multiplexed communication light to the optical path switching device, demultiplex the communication light output from the optical path switching device, and output each demultiplexed communication light to any one communication device of the M communication devices, and
a second optical multiplexer/demultiplexer to output to the optical path switching device the sensor light transmitted from one or more sensor devices of the P sensor devices, and output the backscattered light output from the optical path switching device to the sensor device that is a transmission source of the sensor light.

8. The optical communication system according to claim 5, further comprising a selection device to connect one sensor device of the P sensor devices to the optical multiplexing/demultiplexing device.

9. The optical communication system according to claim 8, wherein one end of the selection device is optically terminated.

10. The optical communication system according to claim 1, wherein each of the first optical fiber and the second optical fiber is a single-core or multi-core core wire of a single-mode or multi-mode fiber.

11. The optical communication system according to claim 1, wherein
the first bypass fiber includes a wavelength division multiplex filter or a wavelength division multiplex coupler as a connection part for the first optical fiber, and
the second bypass fiber includes a wavelength division multiplex filter or a wavelength division multiplex coupler as a connection part for the second optical fiber.

12. The optical communication system according to claim 1, wherein each of the first bypass fiber and the second bypass fiber includes a bidirectional optical amplifier that does not include an optical isolator.

13. The optical communication system according to claim 1, wherein each of the first bypass fiber and the second bypass fiber includes an optical band pass filter to allow the sensor light and the backpropagation light to pass.

14. The optical communication system according to claim 2, wherein the optical path switching device is connected to a third optical fiber in addition to the split first optical fibers and the split optical fibers.

15. The optical communication system according to claim 1, wherein a plurality of the optical amplifiers inserted into the first optical fiber are connected in parallel, and a plurality of the optical amplifiers inserted into the second optical fiber are connected in parallel.
